# EUROPÄISCHE PATENTANMELDUNG

(11) **EP 3 569 087 A1**
(43) Veröffentlichungstag der Anmeldung: **20.11.2019**
(21) Anmeldenummer: 19170645.6
(22) Anmeldetag: 23.04.2019
(51) Int. Cl.: A43B 7/28, A43B 13/16, A43B 13/18, A43B 13/38, B33Y 80/00

(54) **SOHLE FÜR EINEN SCHUH**

(30) Priorität: 16.05.2018 DE 102018111774
(71) Anmelder: OneFID GmbH, 96215 Lichtenfels (DE)
(72) Erfinder: Miller, David, 96269 Rossach (DE); Rauer, Michael, 96250 Ebensfeld (DE); Hofmann, Oliver, 96215 Lichtenfels (DE)
(74) Vertreter: Hafner & Kohl Patent- und Rechtsanwälte PartnerschaftmbB

(57) **Zusammenfassung**

Sohle (1) für einen Schuh, umfassend Strukturelementanordnung (3), welche zumindest abschnittsweise, insbesondere vollständig, durch mehrere miteinander verbundene strebenartige Strukturelemente (4, 5) gebildet ist oder zumindest abschnittsweise, insbesondere vollständig, mehrere miteinander verbundene strebenartige Strukturelemente (4, 5) umfasst.

## Beschreibung

Die Erfindung betrifft eine Sohle für einen Schuh.

Sohlen für Schuhe, kurz Schuhsohlen, sind für unterschiedliche Schuhe in unterschiedlichen Ausführungen weithin bekannt.

Im Zusammenhang mit den Trageeigenschaften bzw. dem Tragekomfort eines Schuhs kommt den Sohlen des Schuhs besondere Bedeutung zu, sodass an die strukturellen Eigenschaften von Sohlen typischerweise hohe die Trageeigenschaften bzw. den Tragekomfort des Schuhs beeinflussende Anforderungen gestellt werden.

Zu den wichtigen die Trageeigenschaften bzw. den Tragekomfort des Schuhs beeinflussenden strukturellen Eigenschaften einer Sohle zählen die Dämpfungseigenschaften bzw. das Dämpfungsvermögen der Sohle. Die Dämpfungseigenschaften werden in der Regel maßgeblich durch den strukturellen Aufbau der Sohle, d. h. insbesondere die mechanischen Eigenschaften des zur Ausbildung der Sohle verwendeten Sohlenmaterials, definiert.

Regelmäßig wird angestrebt, Sohlen mit Zonen, d. h. insbesondere Zonen für einen Vorfußbereich, für einen Mittelfußbereich sowie für einen Rückfußbereich (Fersenbereich), unterschiedlicher Dämpfungseigenschaften auszubilden, sodass die Sohlen in lokal voneinander abgrenzbaren bzw. abgegrenzten Zonen ein unterschiedliches Dämpfungsvermögen aufweisen. In diesem Zusammenhang ist es bisweilen gewünscht bzw. wünschenswert, für einen Träger individuell anpassbare bzw. angepasste Sohlen, d. h. Sohlen mit für einen Träger individuell anpassbaren bzw. angepassten strukturellen Eigenschaften herzustellen.

Die Herstellung von Sohlen mit für einen Träger individuell anpassbaren bzw. angepassten strukturellen Eigenschaften ist bis dato jedoch typischerweise mit einem in fertigungstechnischer wie auch wirtschaftlicher Hinsicht erheblichen Aufwand verbunden.

Der Erfindung liegt die Aufgabe zugrunde, eine demgegenüber verbesserte Sohle mit für einen Träger individuell anpassbaren bzw. angepassten strukturellen Eigenschaften anzugeben.

Die Aufgabe wird durch eine Sohle für einen Schuh gemäß Anspruch 1 gelöst. Die hierzu abhängigen Ansprüche betreffen mögliche Ausführungsformen der Sohle.

Die hierin beschriebene Sohle für einen Schuh (Schuhsohle) ist durch eine im Folgenden näher erläuterte Strukturelementanordnung gebildet bzw. umfasst wenigstens eine entsprechende Strukturelementanordnung. Die Strukturelementanordnung ist zumindest abschnittsweise, insbesondere vollständig, durch mehrere miteinander verbundene strebenartige bzw. -förmige Strukturelemente gebildet bzw. umfasst zumindest abschnittsweise, insbesondere vollständig, mehrere miteinander verbundene strebenartige bzw. - förmige Strukturelemente. Die strebenartigen bzw. -förmigen Strukturelemente werden im Folgenden abgekürzt als "Strukturelemente" bezeichnet.

Die strukturellen Eigenschaften der Sohle, d. h. insbesondere die die Dämpfungseigenschaften bzw. den Härte- bzw. Verformungsgrad definierenden mechanischen Eigenschaften der Sohle, resultieren sonach im Wesentlichen aus dem geometrisch-konstruktiven Aufbau der Strukturelementanordnung, d. h. insbesondere der Anordnung und/oder Ausrichtung jeweiliger Strukturelemente. Entsprechend lassen sich die strukturellen Eigenschaften der Sohle, d. h. insbesondere die die Dämpfungseigenschaften bzw. den Härte- bzw. Verformungsgrad definierenden mechanischen Eigenschaften der Sohle, durch die gezielte Auswahl bzw. Variation der Anordnung und/oder Ausrichtung jeweiliger Strukturelemente gezielt einstellen. Insbesondere ist durch eine gezielte bereichs- bzw. zonenweise Auswahl bzw. eine gezielte bereichs- bzw. zonenweise Variation der Anordnung und/oder Ausrichtung jeweiliger Strukturelemente eine beliebige Anzahl an Bereichen bzw. Zonen, d. h. z. B. einzelne oder mehrere Bereiche bzw. Zonen für einen Vorfußbereich, einzelne oder mehrere Bereiche bzw. Zonen für einen Mittelfußbereich sowie einzelne oder mehrere Bereiche bzw. Zonen für einen Rückfußbereich (Fersenbereich), mit unterschiedlichen strukturellen Eigenschaften, d. h. insbesondere unterschiedlichen mechanischen Eigenschaften, realisierbar. Mithin sind auch Sohlen mit für einen Träger, d. h. insbesondere auch für einen bestimmten Fuß eines Trägers, individuell anpassbaren bzw. angepassten strukturellen Eigenschaften, d. h. insbesondere mechanischen Eigenschaften, realisierbar.

Die strebenartige bzw. -förmige geometrisch-konstruktive Grundform der Strukturelemente ergibt sich im Wesentlichen aus einer länglichen Grundform der Strukturelemente. Die Querschnittsgeometrie der Strukturelemente ist typischerweise vieleckig, d. h. insbesondere viereckig; es sind jedoch prinzipiell auch andere, d. h. z. B. runde bzw. rundliche, Querschnittsgeometrien denkbar.

Wie sich im Weiteren ergibt, können sich unterschiedliche Strukturelemente, wenngleich diese eine strebenartige bzw. -förmige geometrisch-konstruktive Grundform aufweisen, in geometrisch-konstruktiven Eigenschaften, d. h. z. B. ihrer Länge, Breite, Dicke (Höhe), Querschnittsgeometrie, unterscheiden, sodass unterschiedliche Strukturelemente unterschiedliche strukturelle Eigenschaften, d. h. insbesondere unterschiedliche mechanische Eigenschaften, aufweisen.

Wie sich aus vorstehenden Ausführungen ergibt, kann die Strukturelementanordnung Strukturelemente in unterschiedlichen Anordnungen und/oder Ausrichtungen umfassen.

Die Strukturelementanordnung kann wenigstens erste Strukturelemente, welche in einer ersten Raumrichtung bzw. Raumorientierung angeordnet oder ausgebildet sind, und zweite Strukturelemente, welche in einer von der ersten Raumrichtung bzw. Raumorientierung verschiedenen zweiten Raumrichtung bzw.

Raumorientierung angeordnet oder ausgebildet sind, umfassen. Die erste Raumrichtung bzw. Raumorientierung kann z. B. eine durch eine vertikale Raumachse definierte vertikale Raumrichtung bzw. Raumorientierung, die zweite Raumrichtung bzw. Raumorientierung kann eine durch eine horizontale Raumachse definierte horizontale Raumrichtung bzw. Raumorientierung sein. Die ersten Strukturelemente können sonach winklig, d. h. insbesondere rechtwinklig, zu den zweiten Strukturelementen (und umgekehrt) angeordnet bzw. ausgerichtet sein und umgekehrt.

Selbstverständlich kann die Strukturelementanordnung neben entsprechenden ersten und zweiten Strukturelementen weitere Strukturelemente umfassen, welche in wenigstens einer von der ersten und zweiten Raumrichtung bzw. Raumorientierung verschiedenen weiteren Raumrichtung bzw. Raumorientierung, d. h. z. B. in einer bezüglich einer vertikalen und/oder horizontalen Raumrichtung bzw. Raumorientierung schräg verlaufenden Raumrichtung bzw. Raumorientierung, angeordnet oder ausgebildet sind, umfassen. Wie sich im Weiteren ergibt, können jedoch auch erste und/oder zweite Strukturelemente in einer bezüglich einer vertikalen und/oder horizontalen Raumrichtung bzw. Raumorientierung schräg verlaufenden Raumrichtung bzw. Raumorientierung, angeordnet oder ausgebildet sein.

Die ersten und zweiten Strukturelemente können, insbesondere aufgrund ihrer unterschiedlichen Anordnung und Ausrichtung, unterschiedlich funktionalisiert sein, d. h. sich in ihrer Funktion unterscheiden. Die ersten Strukturelemente können z. B. als zur Übertragung von bei bestimmungsgemäßer Verwendung auf die Sohle wirkenden Kräften, d. h. insbesondere Druckkräften, angeordnet oder ausgebildet sein. Die ersten Strukturelemente können bzw. werden sonach auch als Kraftübertragungselemente, d. h. insbesondere als Druckkraftübertragungselemente, bezeichnet bzw. erachtet (werden). Die zweiten Strukturelemente können z. B. als zur Dämpfung von bei bestimmungsgemäßer Verwendung auf die Sohle wirkenden Kräften, d. h. insbesondere Druckkräften, angeordnet oder ausgebildet sein. Die zweiten Strukturelemente können bzw. werden sonach (auch) als Dämpfungselemente bezeichnet bzw. erachtet (werden).

Die Strukturelementanordnung kann ferner dritte Strukturelemente umfassen, welche sich funktionell von den ersten und zweiten Strukturelementen unterscheiden. Die dritten Strukturelemente sind als zur Übertragung von auf die Sohle bzw. die Strukturelementanordnung, insbesondere in Längsrichtung der Sohle bzw. der Strukturelementanordnung wirkenden, Zugkräften ausgebildete Zugkraftübertragungselemente und/oder als zur Übertragung von innerhalb der Sohle bzw. der Strukturelementanordnung entstehenden, insbesondere in Längsrichtung der Sohle bzw. der Strukturelementanordnung wirkenden, Zugkräften ausgebildete Zugkraftübertragungselemente angeordnet oder ausgebildet. Die dritten Strukturelemente können bzw. werden sonach auch als Zugkraftübertragungselemente bezeichnet bzw. erachtet. Entsprechende dritte Strukturelemente können insbesondere zwischen zwei, insbesondere parallel angeordneten oder ausgebildeten, zweiten Strukturelementen angeordnet oder ausgebildet sein.

Die dritten Strukturelemente sind in einer dritten Raumrichtung bzw. Raumorientierung angeordnet oder ausgebildet. Die dritte Raumrichtung bzw. Raumorientierung kann eine durch eine horizontale Raumachse definierte horizontale Raumrichtung bzw. Raumorientierung sein. Die dritte Raumrichtung bzw. Raumorientierung kann sonach der zweiten Raumrichtung bzw. Raumorientierung der zweiten Strukturelemente entsprechen.

Die ersten Strukturelemente und/oder die zweiten Strukturelemente können segmentiert ausgeführt sein. Die ersten und/oder die zweiten Strukturelemente können sonach durch wenigstens zwei, insbesondere zumindest abschnittsweise parallel verlaufend angeordnete, Strukturelementsegmente gebildet sein oder wenigstens zwei, insbesondere zumindest abschnittsweise parallel verlaufend angeordnete, Strukturelementsegmente umfassen. Durch eine segmentierte Ausführung der Strukturelemente - wobei es denkbar ist, dass nur erste oder nur zweite Strukturelemente segmentiert ausgeführt sind - können die strukturellen Eigenschaften der Strukturelementanordnung bzw. der Sohle, d. h. insbesondere die mechanischen Eigenschaften der Strukturelementanordnung bzw. der Sohle, weiter gezielt beeinflusst werden.

Jeweilige Strukturelementsegmente können paarweise angeordnet oder ausgebildet sein. Dies gilt insbesondere für parallel angeordnete oder ausgebildete Strukturelementsegmente. Die ersten und/oder zweiten Strukturelemente können sonach insbesondere mehrere Paare parallel angeordneter oder ausgebildeter Strukturelementsegmente umfassen. Wenigstens zwei parallel angeordnete oder ausgebildete Strukturelementsegmente können ein Strukturelementsegmentpaar bilden.

Unabhängig von deren möglicher segmentierter Ausführung können die ersten Strukturelemente und/oder die zweiten Strukturelemente schräg bezüglich einer horizontalen oder vertikalen Referenzachse oder -ebene verlaufend angeordnet sein. Eine entsprechend schräg bezüglich einer horizontalen oder vertikalen Referenzachse oder -ebene angeordneter Verlauf jeweiliger Strukturelemente bzw. für den Fall der segmentierten Ausführung jeweiliger Strukturelementsegmente stellt ebenso eine Maßnahme zur gezielten Beeinflussung der strukturellen Eigenschaften der Strukturelementanordnung bzw. der Sohle, d. h. insbesondere der mechanischen Eigenschaften der Strukturelementanordnung bzw. der Sohle, dar, da sich durch den schrägen Verlauf insbesondere andere Dämpfungseigenschaften der jeweiligen Strukturelemente ergeben können. Entsprechend können insbesondere die als Dämpfungselemente angeordneten oder ausgebildeten zweiten Strukturelemente schräg bezüglich einer horizontalen oder vertikalen Referenzachse oder -ebene verlaufend angeordnet sein. Dabei ist es denkbar, dass bezüglich einer Oberseite der Sohle obere zweite Strukturelemente unter einem anderen Winkel schräg bezüglich einer entsprechenden Referenzachse bzw. -ebene verlaufend angeordnet oder ausgebildet sind, als untere zweite Strukturelemente.

Auch eine Kombination der segmentierten Ausführung und des schräg bezüglich einer horizontalen oder vertikalen Referenzachse oder -ebene angeordneten Verlaufs jeweiliger Strukturelemente ist denkbar. Mithin können die ersten Strukturelemente und/oder die zweiten Strukturelemente durch wenigstens zwei, insbesondere zumindest abschnittsweise parallel verlaufend angeordnete, Strukturelementsegmente gebildet sein oder wenigstens zwei, insbesondere zumindest abschnittsweise parallel verlaufend angeordnete, Strukturelementsegmente umfassen, und die jeweiligen Strukturelementsegmente des ersten Strukturelements und/oder die jeweiligen Strukturelementsegmente des zweiten Strukturelements schräg bezüglich einer horizontalen oder vertikalen Referenzachse oder -ebene verlaufend angeordnet sein. Insbesondere ist es denkbar, dass wenigstens ein zweites Strukturelement, insbesondere alle zweiten Strukturelemente, durch wenigstens zwei, insbesondere zumindest abschnittsweise parallel verlaufend angeordnete, Strukturelementsegmente gebildet sind oder wenigstens zwei, insbesondere zumindest abschnittsweise parallel verlaufend angeordnete, Strukturelementsegmente umfassen, und die jeweiligen Strukturelementsegmente des wenigstens einen zweiten Strukturelements, insbesondere aller zweiter Strukturelemente, schräg bezüglich einer horizontalen oder vertikalen Referenzachse oder -ebene verlaufend angeordnet sind.

Für ein durch mehrere entsprechende Strukturelementsegmentpaare gebildetes oder umfassendes segmentiert ausgeführtes Strukturelement gilt, dass ein erstes Strukturelementsegmentpaar in einem ersten Winkel bezüglich einer horizontalen oder vertikalen Referenzachse oder -ebene verlaufend angeordnet sein kann und ein zweites Strukturelementsegmentpaar in einem zweiten Winkel bezüglich einer horizontalen oder vertikalen Referenzachse oder -ebene verlaufend angeordnet sein kann. Derart kann sich eine keilförmige Geometrie des Strukturelements ergeben, wobei die Keilflanken durch jeweilige Strukturelementsegmentpaare gebildet sind. Insbesondere kann sich eine spiegelsymmetrische Anordnung jeweiliger Strukturelementsegmentpaare ergeben. Der Winkel zwischen jeweiligen Strukturelementsegmentpaaren ist typischerweise stumpf, d. h. typischerweise oberhalb 90°, insbesondere oberhalb 130°, gegebenenfalls oberhalb 150°.

Durch eine bestimmte Anordnung und Ausrichtung entsprechender erster und zweiter Strukturelemente kann eine kombinierte Kraftübertragungs-Dämpfungs-Substruktur ausgebildet werden. Die im Folgenden abgekürzt als "Substruktur" bezeichnete kombinierte Kraftübertragungs-Dämpfungs-Substruktur hat sonach aufgrund der, wie erwähnt, als Kraftübertragungselemente dienenden ersten Strukturelemente sowohl Kraftübertragungseigenschaften als auch aufgrund der, wie erwähnt, als Dämpfungselemente dienenden zweiten Strukturelemente Dämpfungseigenschaften inne. Die Substruktur zeichnet sich damit sowohl durch eine Kraftübertragungsfunktion und als auch durch eine Dämpfungsfunktion aus.

Die Substruktur kann in einer konkreten Ausführungsform z. B. durch zwei erste Strukturelemente, d. h. zwei Kraftübertragungselemente, und zwei zweite Strukturelemente, d. h. zwei Dämpfungselemente, gebildet sein bzw. zwei erste Strukturelemente, d. h. zwei Kraftübertragungselemente, und zwei zweite Strukturelemente, d. h. zwei Dämpfungselemente, umfassen. Die beiden Kraftübertragungselemente sind typischerweise in einer Ausrichtung parallel zu der Richtung einer, insbesondere bei bestimmungsgemäßer Verwendung der Sohle, auf die Sohle wirkenden Kraft (Kraftwirkrichtung) angeordnet. Die beiden Dämpfungselemente sind typischerweise in einer Ausrichtung quer zu der Richtung einer, insbesondere bei bestimmungsgemäßer Verwendung der Sohle, auf die Sohle wirkenden Kraft (Kraftwirkrichtung) angeordnet.

Die beiden Dämpfungselemente (zweite Strukturelemente) einer Substruktur können dabei unter Ausbildung einer Dämpfungselementanordnung parallel zu einander angeordnet oder ausgebildet sein. Durch Vorsehen unterschiedlicher Dämpfungselementanordnungen können lokal unterschiedliche Dämpfungseigenschaften ausgebildet werden.

Die Dämpfungseigenschaften einer jeweiligen Dämpfungselementanordnung ergeben sich insbesondere aus der Dicke der diese bildenden Dämpfungselemente sowie dem Abstand zwischen den diese bildenden Dämpfungselementen. Mithin sind über die Dicke der Dämpfungselemente und deren Abstand zueinander Parameter zur gezielten Auswahl und Einstellung bestimmter Dämpfungseigenschaften der Dämpfungselementanordnung gegeben. Durch entsprechende Auswahl und Einstellung der Parameter kann für eine bestimmte auf die Dämpfungselementanordnung wirkende Kraft z. B. eine bestimmte Verformung, d. h. insbesondere eine maximale Verformung, der Dämpfungselementanordnung definiert werden.

Die Einleitung von Kräften in die Dämpfungselementanordnung erfolgt typischerweise über jeweilige Kraftübertragungselemente einer jeweiligen Substruktur. Ein erstes Kraftübertragungselement ist typischerweise derart relativ zu einem diesen benachbarten ersten Dämpfungselement angeordnet, dass über dieses Kräfte in die Dämpfungselementanordnung übertragbar sind. Ein zweites Kraftübertragungselement ist typischerweise derart relativ zu einem diesen benachbarten zweiten Dämpfungselement angeordnet, dass über dieses Kräfte aus der Dämpfungselementanordnung auf dieses übertragbar sind.

Aufgrund der, wie erwähnt, typischerweise vertikalen Ausrichtung der Kraftübertragungselemente und der, wie erwähnt, typischerweise horizontalen Ausrichtung der Dämpfungselemente kann sich für eine Substruktur sonach ein Doppel-T-Aufbau ergeben, bei welchem die durch die Dämpfungselemente gebildeten horizontal verlaufenden Abschnitte der "Ts" aufeinander liegend angeordnet und die durch die Kraftübertragungselemente gebildeten vertikal verlaufenden Abschnitte der "Ts" in vertikaler Richtung miteinander fluchtend angeordnet sind.

Die Strukturelementanordnung kann eine Vielzahl an entsprechenden Substrukturen umfassen. Die Substrukturen sind typischerweise in einer (gemeinsamen) Ebene der Sohle angeordnet und ausgerichtet. Mehrere Substrukturen können eine Substrukturanordnung bilden.

Die Sohle kann neben den Strukturelementen mehrere zum Einleiten einer bei bestimmungsgemäßer Verwendung auf die Sohle wirkenden Kraft in wenigstens eine jeweilige Substruktur ausgebildete flächige, insbesondere plättchenartige bzw. -förmige, Krafteinleitungselemente umfassen. Jeweilige im Weiteren abgekürzt als "Krafteinleitungselemente" bezeichnete flächige Krafteinleitungselemente können eine vieleckige, d. h. insbesondere eine viereckige, Grundform aufweisen. Jeweilige Krafteinleitungselemente können auf einer Ober- und/oder einer Unterseite der Strukturelementanordnung angeordnet oder ausgebildet sein. Mithin können erste Krafteinleitungselemente vorgesehen sein, welche auf einer Oberseite der Strukturelementanordnung angeordnet oder ausgebildet sind, und zweite Krafteinleitungselemente vorgesehen sein, welche auf einer Unterseite der Strukturelementanordnung angeordnet oder ausgebildet sind. Jeweilige auf einer Ober- bzw. einer Unterseite der Strukturelementanordnung angeordnete oder ausgebildete Krafteinleitungselemente sind typischerweise nicht unmittelbar mit- bzw. untereinander verbunden. Zwischen auf einer Ober- bzw. einer Unterseite der Strukturelementanordnung unmittelbar benachbart angeordneten oder ausgebildeten Krafteinleitungselementen daher ist typischerweise ein Spaltraum gebildet. Die Einleitung einer Kraft in ein erstes Krafteinleitungselement bedingt damit nicht unmittelbar die Einleitung einer Kraft in ein zu dem ersten Krafteinleitungselement unmittelbar benachbart angeordnetes oder ausgebildetes zweites Krafteinleitungselement.

Die Krafteinleitungselemente sind typischerweise zum Einleiten einer auf die Sohle wirkenden Kraft in die Kraftübertragungselemente (ersten Strukturelemente) einer jeweiligen Substruktur ausgebildet und entsprechend mit wenigstens einem Kraftübertragungselement verbunden; an jeweiligen Krafteinleitungselementen ist sonach typischerweise wenigstens ein erstes Strukturelement angebunden. Das jeweilige erste Strukturelement ragt typischerweise in vertikaler Richtung von einer der Strukturelementanordnung zugewandten Ober- oder Unterseite eines jeweiligen Krafteinleitungselements in Richtung der Dämpfungselemente ab.

Durch entsprechende Krafteinleitungselemente und entsprechende Substrukturen kann eine Einheitszelle der Sohle gebildet werden. Eine Einheitszelle kann als geometrisch-konstruktiver Grundbaustein der Sohle bezeichnet bzw. erachtet werden. Eine Einheitszelle ist typischerweise durch eine Mehrzahl an in einer (gemeinsamen) Ebene der Sohle und um einen bestimmten Winkel, d. h. beispielsweise einen Winkel von 90°, relativ zueinander verdreht bzw. versetzt zueinander angeordnete und ausgerichtete Substrukturen sowie eine Mehrzahl an auf diesen Substrukturen ober- und unterseitig angeordneten oder ausgebildeten Krafteinleitungselementen gebildet. Die Substrukturen einer Einheitszelle können, insbesondere im Bereich ihrer Enden, über, insbesondere blockartige, Verbindungsbereiche miteinander verbunden sein. Die Krafteinleitungselemente bilden typischerweise die Ober- und Unterseite einer jeweiligen Einheitszelle. Die Substrukturen bilden typischerweise die Seiten einer jeweiligen Einheitszelle.

Eine jeweilige Einheitszelle kann, je nach den konkreten Abmessungen der einzelnen Bestandteile der Einheitszelle z. B. eine quaderartige bzw. -förmige Grundform, d. h. insbesondere eine würfelartige bzw. -förmige Grundform, aufweisen. Die Kanten- bzw. Seitenlänge einer entsprechend quaderartigen bzw. -förmigen Einheitszelle kann z. B. in einem Bereich zwischen 5 und 15 mm, insbesondere zwischen bei ca. 10 mm, liegen. Die Höhe einer entsprechend quaderartigen bzw. -förmigen Einheitszelle kann ebenso z. B. in einem Bereich zwischen 5 und 15 mm, insbesondere zwischen bei ca. 10 mm, liegen. Größer oder kleiner abgemessene Einheitszellen sind denkbar.

Eine konkrete Ausführungsform einer Einheitszelle kann vier in einer Ebene um 90° verdreht bzw. versetzt zueinander angeordnete und ausgerichtete Substrukturen umfassen, welche eine Substrukturanordnung bilden. Auf dieser Substrukturanordnung ist oberseitig ein erstes Krafteinleitungselement und unterseitig ein zweites Krafteinleitungselement angeordnet oder ausgebildet. Die Einheitszelle umfasst sonach vier Substrukturen und zwei Krafteinleitungselemente. Die Substrukturen bilden die Seitenflächen der Einheitszelle, das erste Krafteinleitungselement bildet die Oberseite, das zweite Krafteinleitungselement bildet die Unterseite der Einheitszelle. Die Einheitszelle weist eine quaderartige bzw. -förmige Grundform, d. h. insbesondere eine würfelartige bzw. -förmige Grundform, auf.

Die strukturellen Eigenschaften, d. h. insbesondere die mechanischen Eigenschaften, einer jeweiligen Einheitszelle sind durch die strukturellen Eigenschaften, d. h. insbesondere die mechanischen Eigenschaften, der Bestandteile der Einheitszelle sowie deren Anordnung und Ausrichtung relativ zu einander definierbar bzw. definiert.

Die Sohle umfasst typischerweise eine Vielzahl an im Hinblick auf deren geometrisch-konstruktive Eigenschaften, d. h. insbesondere deren Abmessungen, und/oder deren strukturelle Eigenschaften, d. h. insbesondere deren mechanische Eigenschaften, gleiche oder unterschiedliche Einheitszellen. Konkret können die Einheitszellen sonach gleiche geometrisch-konstruktive Eigenschaften und gleiche strukturelle Eigenschaften aufweisen. Denkbar ist es jedoch auch, dass die Einheitszellen gleiche geometrisch-konstruktive Eigenschaften und unterschiedliche strukturelle Eigenschaften aufweisen. Analoges gilt für Einheitszellen unterschiedlicher geometrisch-konstruktive Eigenschaften, d. h., dass die Einheitszellen unterschiedliche geometrisch-konstruktive Eigenschaften und gleiche strukturelle Eigenschaften aufweisen oder unterschiedliche geometrisch-konstruktive Eigenschaften und unterschiedliche strukturelle Eigenschaften aufweisen.

Durch eine Anordnung gleicher und unterschiedlicher Einheitszellen lassen sich sonach Zonen gleicher oder unterschiedlicher geometrisch-konstruktiver Eigenschaften sowie gleicher oder unterschiedlicher struktureller Eigenschaften, d. h. insbesondere unterschiedlicher mechanischer Eigenschaften, Dämpfung, Härtegrade, Verformungsgrade, etc., ausbilden. Die Sohle kann derart in mehrere Zonen unterschiedlicher geometrische-konstruktiver Eigenschaften sowie unterschiedlicher struktureller Eigenschaften aufgeteilt sein. Insbesondere kann ein oder mehrere Zonen für einen Vorfußbereich, ein oder mehr Zonen für einen Mittelfußbereich und ein oder mehrere Zonen für einen Rückfußbereich (Fersenbereich) vorgesehen werden, wobei sich die Zonen in ihren geometrische-konstruktiven Eigenschaften sowie in ihren strukturellen Eigenschaften unterscheiden können. Die einer bestimmten Zone zugehörigen Einheitszellen weisen sonach typischerweise gleiche geometrisch-konstruktiven Eigenschaften und gleiche strukturelle Eigenschaften auf.

Unmittelbar benachbart angeordnete Einheitszellen können über wenigstens einen Verbindungsbereich miteinander verbunden sein. Ein entsprechender Verbindungsbereich kann z. B. im Bereich jeweiliger Dämpfungselemente bzw. Dämpfungselementanordnungen unmittelbar benachbart angeordneter Einheitszellen ausgebildet sein. Die Verbindung zwischen unmittelbar benachbart angeordneten Einheitszellen kann unlösbar oder (beschädigungs- bzw. zerstörungsfrei) lösbar sein.

Die Sohle bzw. die Bestandteile der Sohle, d. h. insbesondere die Strukturelementanordnung bzw. deren Bestandteile, d. h. z. B. die Strukturelemente sowie die Krafteinleitungselemente, kann bzw. können durch ein additives Herstellungsverfahren, d. h. insbesondere durch sukzessives schichtweises selektives Verfestigen von Schichten aus einem selektiv verfestigbaren Baumaterial, hergestellt sein. Die additive Herstellung der Sohle ermöglicht ein Maximum an konstruktiven Freiheitsgraden im Hinblick auf die funktionelle wie auch konstruktive Konzeptionierung der Sohle. Die additive Herstellung der Sohle erlaubt insbesondere einen größtmöglichen konstruktiven Freiheitsgrad im Hinblick auf die Konzipierung entsprechender Bestandteile der Sohle bzw. der Strukturelementanordnung. Es kommen prinzipiell sämtliche strahlungs-oder nicht strahlungsbasierten additiven Herstellungsverfahren in Betracht, sodass lediglich beispielhaft auf selektive Laserschmelzverfahren, selektive Elektronenstrahlschmelzverfahren, Stereolithographie-Verfahren, Binder-Jetting-Verfahren sowie Fused-Deposition-Modelling-Verfahren verwiesen wird.

Es ist zu erwähnen, dass die Sohle - grundsätzlich unabhängig von Ihrer Herstellung - z. B. aus einem Kunststoff (der Begriff "Kunststoff" umfasst auch Gemische chemisch und/oder physikalisch unterschiedlicher Kunststoffe) und/oder einem Metall gebildet sein kann. Im Hinblick auf die zweckmäßige Herstellung der Sohle in einem additiven Herstellungsprozess handelt es hierbei typischerweise um einen in einem additiven Herstellungsprozess verarbeitbaren Kunststoff bzw. um ein in einem additiven Herstellungsprozess verarbeitbares Metall.

Die Sohle kann insbesondere als Innensohle (Einlegesohle) zum Einlegen in einen Schuh bzw. Oberschuh oder als eine eine Auftrittsfläche eines Schuhs bildende Außensohle (Laufsohle) ausgebildet sein. Bei der Sohle kann es insbesondere um eine Innensohle (Einlegesohle) oder eine Außensohle (Laufsohle) für einen Schuh handeln. In beiden Fällen kann die Sohle ober- und/oder unterseitig mit wenigstens einer zusätzlichen Funktionsschicht, d. h. für die Ausführung als Innensohle z. B. mit einer Textilschicht und für die Ausführung als Außensohle z. B. mit einer, typischerweise profilierten, Außenschicht versehen sein.

Die Erfindung betrifft neben der Sohle auch einen Schuh, d. h. z. B. einen Sportschuh oder einen Orthopädieschuh, welcher, z. B. als Außensohle und/oder als Innensohle, wenigstens eine wie hierin beschriebene Sohle umfasst. Sämtliche Ausführungen im Zusammenhang mit der Sohle gelten analog für den Schuh.

Die Erfindung betrifft neben der Sohle und dem Schuh auch ein Verfahren zur Herstellung einer Strukturelementanordnung einer wie hierin beschriebenen Sohle bzw. einer wie hierin beschriebenen Sohle. Sämtliche Ausführungen im Zusammenhang mit der Sohle gelten analog für das Verfahren.

Das Verfahren zeichnet sich durch die folgenden Schritte aus:
- Erzeugen und/oder Bereitstellen von die Strukturelementanordnung der herzustellenden Sohle bzw. von die Sohle abbildenden Daten, insbesondere die Strukturelementanordnung der Sohle bzw. die Sohle schichtweise abbildenden Slice-Daten,
- additives Herstellen der Strukturelementanordnung der herzustellenden Sohle bzw. der Sohle, insbesondere durch sukzessives schichtweises selektives Verfestigen von Schichten aus einem selektiv verfestigbaren Baumaterial.

Das Verfahren kann mit einer Vorrichtung zur Durchführung additiver Herstellungsprozesse durch sukzessives schichtweises selektives Verfestigen von Schichten aus einem selektiv verfestigbaren Baumaterial, d. h. z. B. einer Vorrichtung zur Durchführung selektiver Laserschmelzverfahren, selektiver Elektronenstrahlschmelzverfahren, Stereolithographie-Verfahren, Binder-Jetting-Verfahren sowie Fused-Deposition-Modelling-Verfahren, durchgeführt werden.

Die Erfindung ist anhand von Ausführungsbeispielen in den Zeichnungen näher erläutert. Dabei zeigt:
Fig. 1 - 2 je eine Prinzipdarstellung einer Sohle gemäß einem ersten Ausführungsbeispiel;
Fig. 3 eine vergrößerte Ansicht der Einzelheit III in Fig. 1;
Fig. 4 eine vergrößerte Ansicht der Einzelheit IV in Fig. 3;
Fig. 5, 6 eine Strukturelementanordnung gemäß einem weiteren Ausführungsbeispiel; und
Fig. 7 eine Prinzipdarstellung eines Schuhs gemäß einem Ausführungsbeispiel.

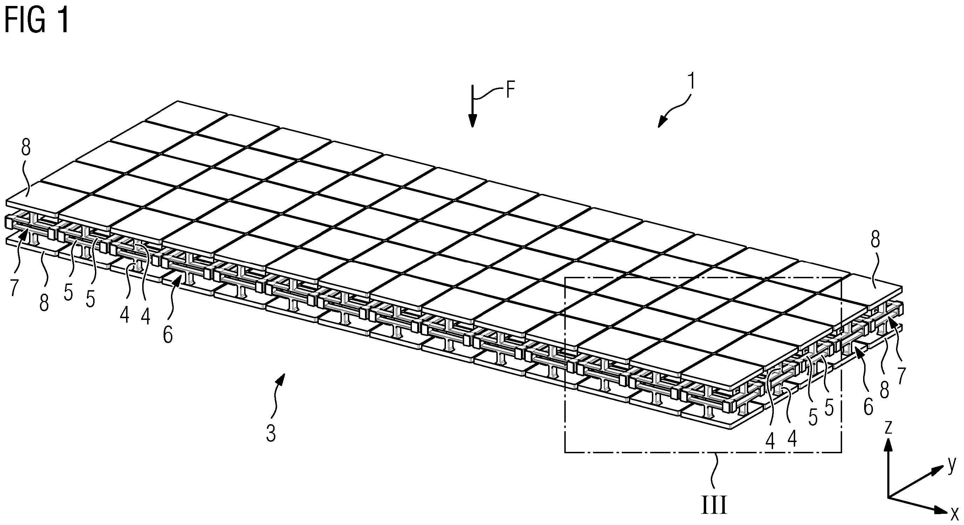

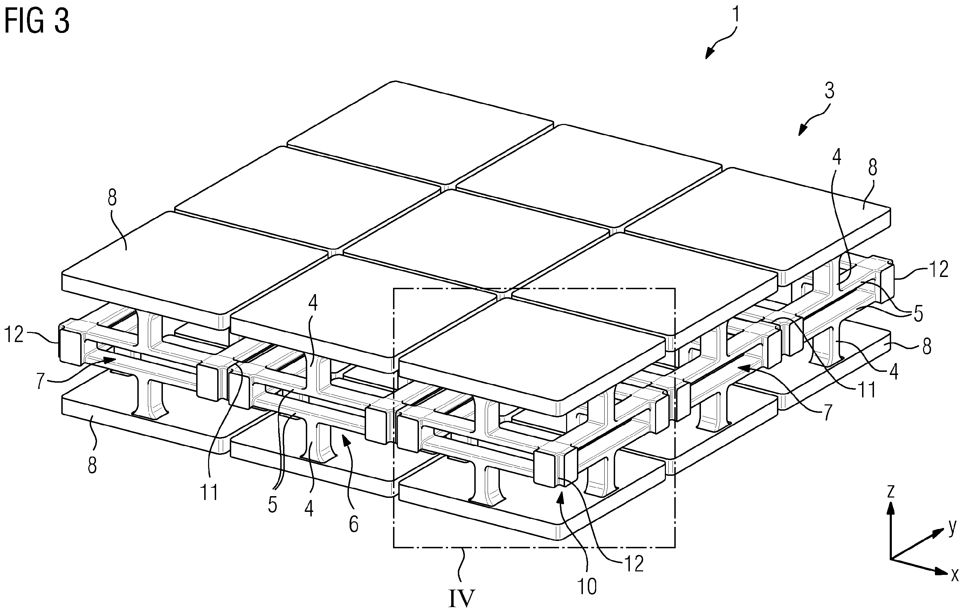

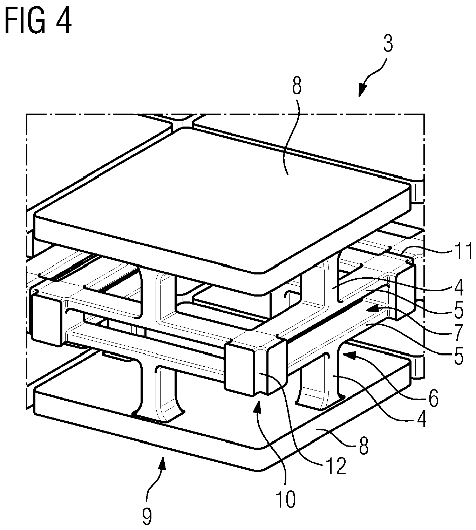

Fig. 1 zeigt eine Prinzipdarstellung einer Sohle 1 für einen Schuh 2 gemäß einem Ausführungsbeispiel in einer perspektivischen Ansicht. Eine Einzelheit III der in Fig. 1 gezeigten Sohle ist in Fig. 3 in einer vergrößerten Ansicht gezeigt; eine Einzelheit IV der in Fig. 3 gezeigten Einzelheit III ist in Fig. 4 in einer vergrößerten Ansicht gezeigt.

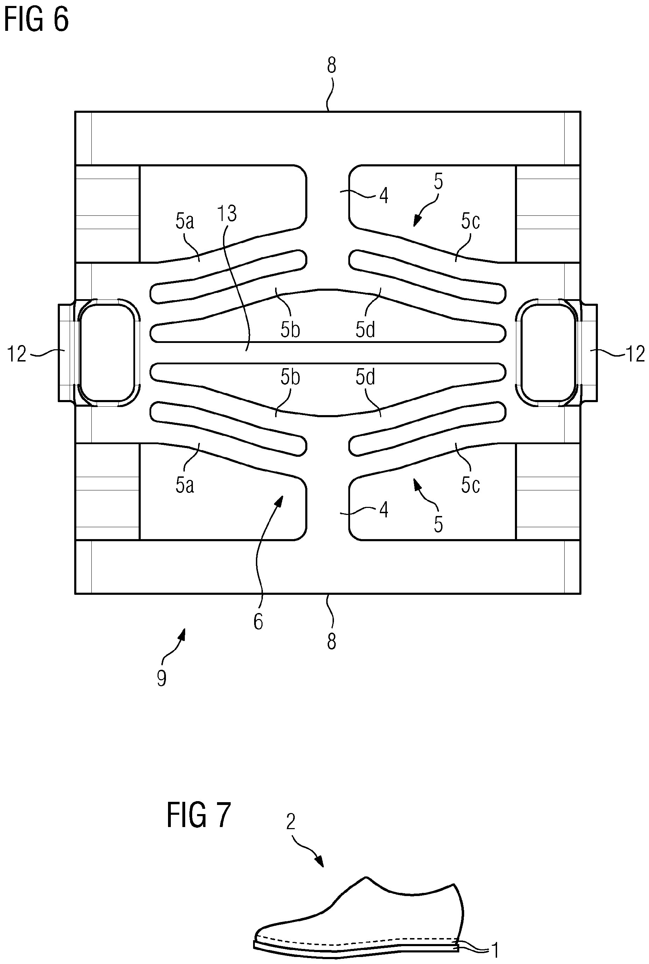

Fig. 7 zeigt eine Prinzipdarstellung eines Schuhs 2. Anhand von Fig. 7 ist ersichtlich, dass die Sohle 1 z. B. als Innensohle (Einlegesohle) und/oder als Außensohle (Laufsohle) des Schuhs 2 ausgebildet sein kann. In Fig. 7 sind die beiden beispielhaften Varianten, d. h. die Verwendung der Sohle 1 als Innensohle und Außensohle gezeigt; selbstverständlich ist nur eine der Varianten möglich.

Anhand der Fig. 1 - 4 ist ersichtlich, dass die Sohle 1 durch eine Strukturelementanordnung 3 gebildet ist bzw. eine Strukturelementanordnung 3 umfasst. Die Strukturelementanordnung 3 ist durch mehrere miteinander verbundene strebenartige bzw. -förmige Strukturelemente 4, 5 gebildet bzw. umfasst mehrere miteinander verbundene strebenartige bzw. -förmige Strukturelemente 4, 5.

Die strebenartige bzw. -förmige geometrisch-konstruktive Grundform der Strukturelemente 4, 5 ergibt sich aus der länglichen Grundform der Strukturelemente 4, 5. Die Querschnittsgeometrie der Strukturelemente 4, 5 ist in den in den Fig. gezeigten Ausführungsbeispielen vieleckig, d. h. insbesondere viereckig; es sind jedoch prinzipiell auch andere, d. h. z. B. runde bzw. rundliche, Querschnittsgeometrien denkbar.

Die strukturellen Eigenschaften der Sohle 1, d. h. insbesondere die die Dämpfungseigenschaften bzw. den Härte- bzw. Verformungsgrad definierenden mechanischen Eigenschaften der Sohle 1, resultieren im Wesentlichen aus dem geometrisch-konstruktiven Aufbau der Strukturelementanordnung 3, d. h. insbesondere der Anordnung und/oder Ausrichtung der Strukturelemente 4, 5. Entsprechend lassen sich die strukturellen Eigenschaften der Sohle 1, d. h. insbesondere die die Dämpfungseigenschaften bzw. den Härte- bzw. Verformungsgrad definierenden mechanischen Eigenschaften der Sohle 1, durch die gezielte Auswahl bzw. Variation der Anordnung und/oder Ausrichtung der Strukturelemente 4, 5 gezielt einstellen.

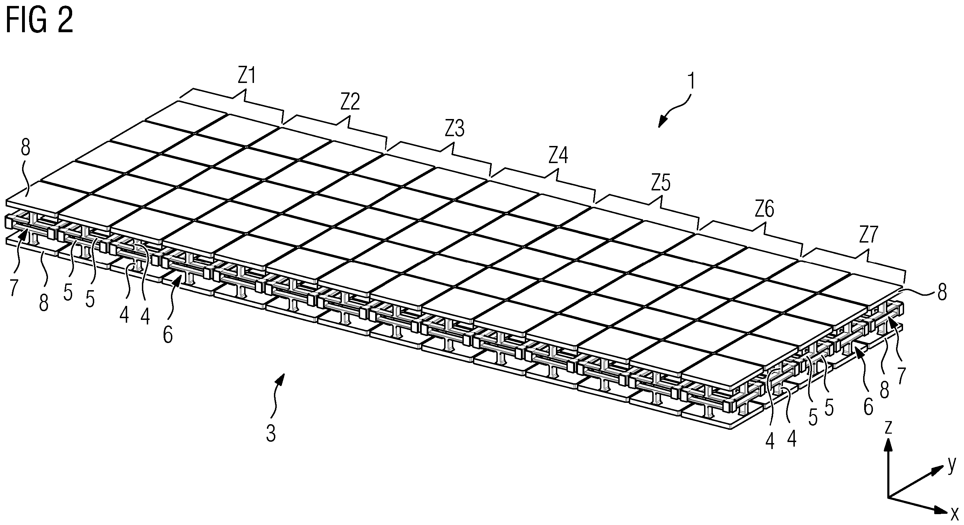

Insbesondere ist durch eine gezielte bereichs- bzw. zonenweise Auswahl bzw. eine gezielte bereichs- bzw. zonenweise Variation der Anordnung und/oder Ausrichtung der Strukturelemente 4, 5 eine beliebige Anzahl an Bereichen bzw. Zonen (vgl. Fig. 2, in welcher beispielhaft eine gleichmäßige Anordnung von sieben unterschiedlichen Zonen Z1 - Z7 - denkbar wäre selbstverständlich auch eine ungleichmäßige Anordnung von mehr oder weniger als sieben Zonen - gezeigt ist), d. h. z. B. einzelne oder mehrere Bereiche bzw. Zonen Z1, Z2 für einen Vorfußbereich, einzelne oder mehrere Bereiche bzw. Zonen Z3, Z4, Z5 für einen Mittelfußbereich sowie einzelne oder mehrere Bereiche bzw. Zonen für einen Rückfußbereich Z6, Z7 (Fersenbereich), mit unterschiedlichen strukturellen Eigenschaften, d. h. insbesondere unterschiedlichen mechanischen Eigenschaften, realisierbar. Die Sohle 1 kann sonach für einen Träger, d. h. insbesondere auch für einen bestimmten Fuß eines Trägers, individuell anpassbaren bzw. angepassten strukturellen Eigenschaften, d. h. insbesondere mechanischen Eigenschaften, aufweisen.

Die Strukturelementanordnung 3 umfasst erste Strukturelemente 4, welche in einer ersten Raumrichtung bzw. Raumorientierung (vertikale Raumrichtung bzw. Raumorientierung, z-Richtung) angeordnet oder ausgebildet sind, und zweite Strukturelemente 5, welche in einer von der ersten Raumrichtung bzw. Raumorientierung verschiedenen zweiten Raumrichtung bzw. Raumorientierung (horizontale Raumrichtung bzw. Raumorientierung, x-Richtung, y-Richtung) angeordnet oder ausgebildet sind. Die erste Raumrichtung bzw. Raumorientierung ist eine durch eine vertikale Raumachse definierte vertikale Raumrichtung bzw. Raumorientierung, die zweite Raumrichtung bzw. Raumorientierung ist eine durch eine horizontale Raumachse definierte horizontale Raumrichtung bzw. Raumorientierung. Die ersten Strukturelemente 4 sind sonach rechtwinklig zu den zweiten Strukturelementen 5 (und umgekehrt) angeordnet bzw. ausgerichtet.

Die ersten und zweiten Strukturelemente 4, 5 sind, insbesondere aufgrund ihrer unterschiedlichen Anordnung und Ausrichtung, unterschiedlich funktionalisiert, d. h. unterscheiden sich in ihrer Funktion. Die ersten Strukturelemente 4 sind als zur Übertragung von bei bestimmungsgemäßer Verwendung auf die Sohle 1 wirkenden Kräften (vgl. Pfeil F in Fig. 1) angeordnet oder ausgebildet und werden sonach auch als Kraftübertragungselemente bezeichnet. Die zweiten Strukturelemente 5 sind als zur Dämpfung von bei bestimmungsgemäßer Verwendung auf die Sohle wirkenden Kräften angeordnet oder ausgebildet und werden sonach auch als Dämpfungselemente bezeichnet werden.

Durch die in den Fig. gezeigte Anordnung und Ausrichtung erster und zweiter Strukturelemente 4, 5 sind kombinierte Kraftübertragungs-Dämpfungs-Substrukturen 6 ausgebildet. Eine jeweilige Substruktur 6 hat aufgrund der als Kraftübertragungselemente dienenden ersten Strukturelemente 4 sowohl Kraftübertragungseigenschaften als auch aufgrund der als Dämpfungselemente dienenden zweiten Strukturelemente 5 Dämpfungseigenschaften inne. Eine jeweilige Substruktur 6 zeichnet sich damit sowohl durch eine Kraftübertragungsfunktion und als auch durch eine Dämpfungsfunktion aus.

Die Substruktur 6 ist in den in den Fig. gezeigten Ausführungsbeispielen durch zwei erste Strukturelemente 4, d. h. zwei Kraftübertragungselemente, und zwei zweite Strukturelemente 5, d. h. zwei Dämpfungselemente, gebildet. Die beiden Kraftübertragungselemente (erste Strukturelemente 4) sind in vertikaler Ausrichtung parallel zu der Richtung einer bei bestimmungsgemäßer Verwendung der Sohle 1 auf die Sohle 1 wirkenden Kraft (Kraftwirkrichtung) angeordnet. Die beiden Dämpfungselemente (zweite Strukturelemente 5) sind in horizontaler Ausrichtung quer zu der Richtung der bei bestimmungsgemäßer Verwendung der Sohle 1 auf die Sohle 1 wirkenden Kraft (Kraftwirkrichtung) angeordnet.

Ersichtlich sind die beiden Dämpfungselemente (zweite Strukturelemente 5) einer Substruktur 6 unter Ausbildung einer Dämpfungselementanordnung 7 parallel zu einander angeordnet oder ausgebildet. Die Dämpfungseigenschaften einer jeweiligen Dämpfungselementanordnung 7 ergeben sich insbesondere aus der Dicke der diese bildenden Dämpfungselemente sowie dem Abstand zwischen den diese bildenden Dämpfungselementen. Mithin sind über die Dicke der Dämpfungselemente und deren Abstand zueinander Parameter zur gezielten Auswahl und Einstellung bestimmter Dämpfungseigenschaften einer Dämpfungselementanordnung 7 gegeben. Durch entsprechende Auswahl und Einstellung der Parameter kann für eine bestimmte auf die Dämpfungselementanordnung 7 wirkende Kraft z. B. eine bestimmte Verformung, d. h. insbesondere eine maximale Verformung, z. B. eine maximale Verformung von 1 mm, der Dämpfungselementanordnung 7 definiert werden.

Die Einleitung von Kräften in eine jeweilige Dämpfungselementanordnung 7 erfolgt über jeweilige Kraftübertragungselemente (erste Strukturelemente 4) einer jeweiligen Substruktur 6. Ein erstes bzw. oberes Kraftübertragungselement ist hierzu derart relativ zu einem diesen benachbarten ersten bzw. oberen Dämpfungselement angeordnet, dass über dieses Kräfte in die Dämpfungselementanordnung 7 übertragbar sind. Ein zweites bzw. unteres Kraftübertragungselement ist derart relativ zu einem diesen benachbarten zweiten bzw. unteren Dämpfungselement angeordnet, dass über dieses Kräfte aus der Dämpfungselementanordnung 7 auf dieses übertragbar sind.

Aufgrund der vertikalen Ausrichtung der Kraftübertragungselemente und der horizontalen Ausrichtung der Dämpfungselemente ergibt sich für eine Substruktur 6 ein Doppel-T-Aufbau, bei welchem die durch die Dämpfungselemente gebildeten horizontal verlaufenden Abschnitte der "Ts" aufeinander liegend angeordnet und die durch die Kraftübertragungselemente gebildeten vertikal verlaufenden Abschnitte der "Ts" in vertikaler Richtung miteinander fluchtend angeordnet sind.

Ersichtlich umfasst die Strukturelementanordnung 3 mehrere entsprechende Substrukturen 6, d. h. eine Vielzahl an Substrukturen 6. Die Substrukturen 6 sind in einer (gemeinsamen) Ebene (x-y-Ebene) der Sohle 1 angeordnet und ausgerichtet. Mehrere Substrukturen 6 können eine Substrukturanordnung 10 bilden.

Die Sohle 1 umfasst neben den Strukturelementen 4, 5 mehrere zum Einleiten einer bei bestimmungsgemäßer Verwendung auf die Sohle 1 wirkenden Kraft in jeweilige Substrukturen 6 ausgebildete flächige, insbesondere plättchenartige bzw. -förmige, Krafteinleitungselemente 8. Die Krafteinleitungselemente 8 weisen in den in den Fig. gezeigten Ausführungsbeispielen eine vieleckige, d. h. eine viereckige, Grundform auf. Ersichtlich sind jeweilige Krafteinleitungselemente 8 auf einer Ober- und/oder einer Unterseite der Strukturelementanordnung 3 angeordnet oder ausgebildet; in den in den Fig. gezeigten Ausführungsbeispielen sind erste bzw. obere Krafteinleitungselemente 8 vorhanden, welche auf einer Oberseite der Strukturelementanordnung 3 angeordnet oder ausgebildet sind, und zweite bzw. untere Krafteinleitungselemente 8 vorhanden, welche auf einer Unterseite der Strukturelementanordnung 3 angeordnet oder ausgebildet sind.

Ersichtlich sind jeweilige auf einer Ober- bzw. einer Unterseite der Strukturelementanordnung 3 angeordnete oder ausgebildete Krafteinleitungselemente 8 nicht unmittelbar mit- bzw. untereinander verbunden. Zwischen auf einer Ober- bzw. einer Unterseite der Strukturelementanordnung 3 unmittelbar benachbart angeordneten oder ausgebildeten Krafteinleitungselementen 8 ist ein Spaltraum gebildet. Die Einleitung einer Kraft in ein erstes Krafteinleitungselement 8 bedingt damit nicht unmittelbar die Einleitung einer Kraft in ein zu dem ersten Krafteinleitungselement 8 unmittelbar benachbart angeordnetes oder ausgebildetes zweites Krafteinleitungselement 8.

Die Krafteinleitungselemente 8 sind zum Einleiten einer auf die Sohle 1 wirkenden Kraft in die Kraftübertragungselemente (ersten Strukturelemente 4) einer jeweiligen Substruktur 6 ausgebildet und entsprechend mit wenigstens einem Kraftübertragungselement verbunden; an jeweiligen Krafteinleitungselementen 8 ist sonach wenigstens ein Kraftübertragungselement angebunden. Das jeweilige Kraftübertragungselement ragt typischerweise in vertikaler Richtung von einer der Strukturelementanordnung 3 zugewandten Ober- oder Unterseite eines jeweiligen Krafteinleitungselements 8 in Richtung der Dämpfungselemente bzw. einer jeweiligen Dämpfungselementanordnung 7 ab.

Durch entsprechende Krafteinleitungselemente 8 und entsprechende Substrukturen 6 ist eine in Fig. 4 gezeigte Einheitszelle 9 der Sohle 1 gebildet. Eine Einheitszelle 9 kann als geometrisch-konstruktiver Grundbaustein der Sohle 1 bezeichnet bzw. erachtet werden. Anhand von Fig. 4 ist ersichtlich, dass eine Einheitszelle 9 durch eine Mehrzahl an in einer (gemeinsamen) Ebene der Sohle 1 und um einen bestimmten Winkel relativ zueinander verdreht bzw. versetzt zueinander angeordnete und ausgerichtete Substrukturen 6 sowie eine Mehrzahl an auf diesen Substrukturen 6 ober- und unterseitig angeordneten oder ausgebildeten Krafteinleitungselementen 8 gebildet ist. Die Substrukturen 6 sind im Bereich ihrer Enden über in den in den Fig. gezeigten Ausführungsbeispielen beispielhaft blockartige Verbindungsbereiche 12 miteinander verbunden.

Die in den in den Fig. gezeigten Ausführungsbeispielen gezeigte Einheitszelle 9 umfasst vier in einer Ebene um 90° verdreht bzw. versetzt zueinander angeordnete und ausgerichtete Substrukturen 6, welche eine Substrukturanordnung 10 bilden. Auf dieser Substrukturanordnung 10 ist oberseitig das erste bzw. obere Krafteinleitungselement 8 und unterseitig das zweite bzw. untere Krafteinleitungselement 8 angeordnet bzw. ausgebildet. Die Einheitszelle 9 umfasst sonach vier Substrukturen 6 und zwei Krafteinleitungselemente 8. Die Substrukturen 6 bilden die Seitenflächen der Einheitszelle 9, das erste bzw. obere Krafteinleitungselement 8 bildet die Oberseite, das zweite bzw. untere Krafteinleitungselement 8 bildet die Unterseite der Einheitszelle 9.

Ersichtlich weist die Einheitszelle 9 eine quaderartige bzw. -förmige bzw. eine würfelartige bzw. -förmige Grundform auf. Die Kanten- bzw. Seitenlänge der Einheitszelle 9 kann z. B. in einem Bereich zwischen 5 und 15 mm, insbesondere zwischen bei ca. 10 mm, liegen. Die Höhe der Einheitszelle 9 kann ebenso z. B. in einem Bereich zwischen 5 und 15 mm, insbesondere zwischen bei ca. 10 mm, liegen.

Die strukturellen Eigenschaften, d. h. insbesondere die mechanischen Eigenschaften, einer jeweiligen Einheitszelle 9 sind durch die strukturellen Eigenschaften, d. h. insbesondere die mechanischen Eigenschaften, der Bestandteile der Einheitszelle 9 sowie deren Anordnung und Ausrichtung relativ zu einander definierbar bzw. definiert.

Anhand der Fig. 1 - 3 ist ersichtlich, dass die Sohle 1 eine Vielzahl an im Hinblick auf deren geometrisch-konstruktive Eigenschaften, d. h. insbesondere deren Abmessungen, gleiche Einheitszellen 9 umfasst. Unmittelbar benachbart angeordnete Einheitszellen 9 sind über einen Verbindungsbereich 11 miteinander verbunden. Ein entsprechender Verbindungsbereich 11 ist in den in den Fig. gezeigten Ausführungsbeispielen im Bereich jeweiliger Dämpfungselemente bzw. Dämpfungselementanordnungen 7 unmittelbar benachbart angeordneter Einheitszellen 9 ausgebildet.

In gleichen Zonen der Sohle 1 angeordnete Einheitszellen 9 weisen typischerweise gleiche strukturelle Eigenschaften, d. h. insbesondere gleiche mechanische Eigenschaften, auf. In unterschiedlichen Zonen der Sohle 1 angeordnete Einheitszellen 9 können unterschiedliche strukturelle Eigenschaften d. h. insbesondere unterschiedliche mechanische Eigenschaften, aufweisen.

Durch eine Anordnung von im Hinblick auf ihre strukturellen Eigenschaften, d. h. insbesondere mechanische Eigenschaften, gleicher oder unterschiedlicher Einheitszellen 9 lassen sich sonach Zonen gleicher oder unterschiedlicher struktureller Eigenschaften, d. h. insbesondere unterschiedlicher mechanischer Eigenschaften, Dämpfung, Härtegrade, Verformungsgrade, etc., ausbilden. Die Sohle 1 kann derart, wie bereits im Zusammenhang mit dem in Fig. 2 gezeigten Ausführungsbeispiel erläutert, in mehrere Zonen unterschiedlicher struktureller Eigenschaften aufgeteilt sein. Die einer bestimmten Zone zugehörigen Einheitszellen 9 weisen, wie erwähnt, typischerweise gleiche geometrisch-konstruktiven Eigenschaften und gleiche strukturelle Eigenschaften auf.

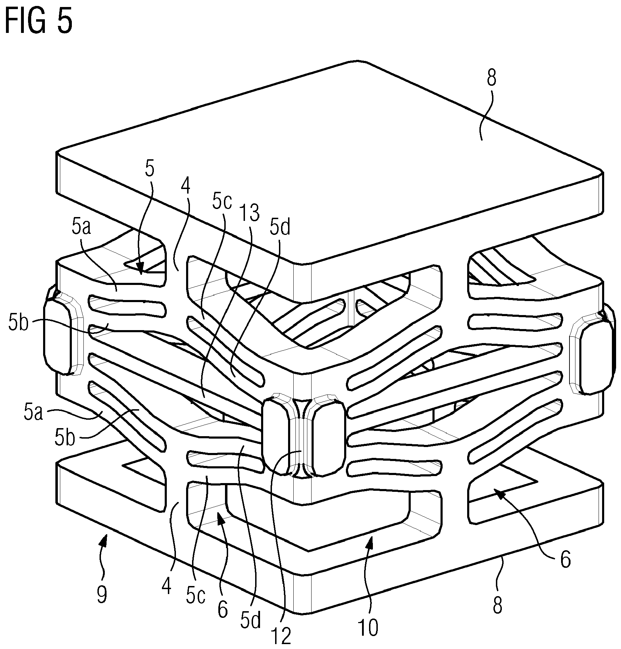

Die Fig. 5, 6 zeigen eine Strukturelementanordnung 3 bzw. eine Einheitszelle 9 gemäß einem weiteren Ausführungsbeispiel. Die Strukturelementanordnung 3 bzw. bzw. die Einheitszelle 9 ist in Fig. 5 in einer perspektivischen Ansicht und in Fig. 6 in einer Frontansicht gezeigt.

Bei der in dem in den Fig. 5, 6 gezeigten Ausführungsbeispiel handelt es sich um eine alternative Ausführung zu dem in den Fig. 4 gezeigten Ausführungsbeispiel einer Einheitszelle 9; mithin könnte auch die Einheitszelle 9 gemäß dem in den Fig. 5, 6 gezeigten Ausführungsbeispiel anstelle der Einheitszelle 9 gemäß dem in Fig. 4 gezeigten Ausführungsbeispiel zur Ausbildung einer Sohle 1 verwendet werden. Auch eine Sohle 1, welche sowohl Einheitszellen 9 gemäß dem in Fig. 4 gezeigten Ausführungsbeispiel als auch Einheitszellen 9 gemäß dem in den Fig. 5, 6 gezeigten Ausführungsbeispiel umfasst, ist denkbar.

Anhand des in den Fig. 5, 6 gezeigten Ausführungsbeispiels ist ersichtlich, dass die zweiten Strukturelemente 5 segmentiert ausgeführt sein können - Analoges gilt, wenngleich nicht gezeigt, für die ersten Strukturelemente 4. Die zweiten Strukturelemente 5 können sonach durch mehrere parallel verlaufend angeordnete Strukturelementsegmente 5a - 5d gebildet sein. Durch eine segmentierte Ausführung der zweiten Strukturelemente 5 können die strukturellen Eigenschaften der Strukturelementanordnung 3 und somit der Sohle 1, d. h. insbesondere die mechanischen Eigenschaften der Sohle 1, weiter gezielt beeinflusst werden.

Ersichtlich können parallel angeordnete bzw. ausgebildete Strukturelementsegmente 5a - 5d paarweise angeordnet oder ausgebildet sein. Die zweiten Strukturelemente 5 können sonach mehrere Paare parallel angeordneter oder ausgebildeter Strukturelementsegmente 5a - 5d umfassen. In dem in den Fig. 5, 6 gezeigten Ausführungsbeispiel bilden zwei parallel angeordnete bzw. ausgebildete Strukturelementsegmente 5a - 5d können ein Strukturelementsegmentpaar bilden. Jedes zweite Strukturelement 5 ist sonach durch zwei Strukturelementsegmentpaare gebildet bzw. umfasst zwei Strukturelementsegmentpaare.

Anhand des in den Fig. 5, 6 gezeigten Ausführungsbeispiels ist weiter ersichtlich, dass - grundsätzlich unabhängig von deren segmentierter Ausführung - die zweiten Strukturelemente 5 - Analoges gilt wiederum für die ersten Strukturelemente 4 - schräg bezüglich einer horizontalen oder vertikalen Referenzachse oder -ebene verlaufend angeordnet sein können. Eine entsprechend schräg bezüglich einer horizontalen oder vertikalen Referenzachse oder -ebene angeordneter Verlauf jeweiliger Strukturelemente 5 bzw. für den in den Fig. 5, 6 gezeigten Fall der segmentierten Ausführung jeweiliger Strukturelemente 5 stellt ebenso eine Maßnahme zur gezielten Beeinflussung der strukturellen Eigenschaften der Strukturelementanordnung 3 bzw. der Sohle 1, d. h. insbesondere der mechanischen Eigenschaften der Strukturelementanordnung 3 bzw. der Sohle 1, dar, da sich durch den schrägen Verlauf insbesondere andere Dämpfungseigenschaften der Strukturelementanordnung 3 ergeben können. Entsprechend können insbesondere die als Dämpfungselemente bzw. die zweiten Strukturelemente 5 schräg bezüglich einer horizontalen oder vertikalen Referenzachse oder -ebene verlaufend angeordnet sein. Dabei ist es, wie in den Fig. 5, 6 gezeigt, dass bezüglich einer Oberseite der Sohle 1 obere zweite Strukturelemente 5 unter einem anderen Winkel schräg bezüglich einer entsprechenden Referenzachse bzw. -ebene verlaufend angeordnet oder ausgebildet sind, als untere zweite Strukturelemente 5.

In den Fig. 5, 6 ist eine Kombination der segmentierten Ausführung der zweiten Strukturelemente 5 und des schräg bezüglich einer horizontalen oder vertikalen Referenzachse oder -ebene angeordneten Verlaufs der zweiten Strukturelemente 5 gezeigt. Mithin sind die zweiten Strukturelemente 5 durch mehrere parallel verlaufend angeordnete Strukturelementsegmente 5a - 5d gebildet, und die Strukturelementsegmente 5a - 5d sind schräg bezüglich einer horizontalen oder vertikalen Referenzachse oder -ebene verlaufend angeordnet.

Für die jeweiligen Strukturelementsegmentpaare eines zweiten Strukturelements 5 gilt, dass ein erstes Strukturelementsegmentpaar in einem ersten Winkel bezüglich einer horizontalen oder vertikalen Referenzachse oder -ebene verlaufend angeordnet ist und ein zweites Strukturelementsegmentpaar zweier Strukturelementsegmente 5a - 5d in einem zweiten Winkel bezüglich der horizontalen oder vertikalen Referenzachse oder -ebene verlaufend angeordnet ist. Derart ergibt sich die in den Fig. 5, 6 gezeigte keilförmige Geometrie der zweiten Strukturelemente 5 ergeben, wobei die Keilflanken durch jeweilige Strukturelementsegmentpaare gebildet sind.

Ersichtlich ist eine spiegelsymmetrische Anordnung jeweiliger ein jeweiliges zweites Strukturelement 5 bildender Strukturelementsegmentpaare gegeben. Der Winkel zwischen jeweiligen Strukturelementsegmentpaaren ist stumpf, d. h. typischerweise oberhalb 90°, insbesondere oberhalb 130°, gegebenenfalls oberhalb 150°.

Anhand des in den Fig. 5, 6 gezeigten Ausführungsbeispiels sind ferner optionale dritte Strukturelemente 13 ersichtlich. Die Strukturelementanordnung 3 kann sonach ferner dritte Strukturelemente 13 umfassen, welche sich funktionell von den ersten und zweiten Strukturelementen 4, 5 unterscheiden. Die dritten Strukturelemente 13 sind als zur Übertragung von auf die Sohle 1 bzw. die Strukturelementanordnung 3, insbesondere in Längsrichtung der Sohle 1 bzw. der Strukturelementanordnung 3 wirkenden, Zugkräften ausgebildete Zugkraftübertragungselemente respektive als zur Übertragung von innerhalb der Sohle 1 bzw. der Strukturelementanordnung 3 entstehenden, insbesondere in Längsrichtung der Sohle 1 bzw. der Strukturelementanordnung 3 wirkenden, Zugkräften ausgebildete Zugkraftübertragungselemente angeordnet oder ausgebildet. Die dritten Strukturelemente 13 können sonach auch als Zugkraftübertragungselemente bezeichnet bzw. erachtet werden.

Ersichtlich sind jeweilige dritte Strukturelemente 13 jeweils zwischen zwei zweiten Strukturelementen 5 angeordnet bzw. ausgebildet und in einer durch eine horizontale Raumachse definierte horizontale Raumrichtung bzw. Raumorientierung angeordnet.

Für alle Ausführungsbeispiele gilt, dass die Sohle 1 bzw. die Bestandteile der Sohle 1, d. h. insbesondere die Strukturelementanordnung 3 bzw. deren Bestandteile, d. h. z. B. die Strukturelemente 4, 5 sowie die Krafteinleitungselemente 8, sind typischerweise durch ein additives Herstellungsverfahren, d. h. insbesondere durch sukzessives schichtweises selektives Verfestigen von Schichten aus einem selektiv verfestigbaren Baumaterial, hergestellt. Es kommen prinzipiell sämtliche strahlungs- oder nicht strahlungsbasierten additiven Herstellungsverfahren in Betracht, sodass lediglich beispielhaft auf selektive Laserschmelzverfahren, selektive Elektronenstrahlschmelzverfahren, Stereolithographie-Verfahren, Binder-Jetting-Verfahren sowie Fused-Deposition-Modelling-Verfahren verwiesen wird.

Ebenso gilt für alle Ausführungsbeispiele, dass die Sohle 1 - grundsätzlich unabhängig von Ihrer Herstellung - z. B. aus einem Kunststoff (der Begriff "Kunststoff" umfasst auch Gemische chemisch und/oder physikalisch unterschiedlicher Kunststoffe) und/oder einem Metall gebildet sein kann. Im Hinblick auf die zweckmäßige Herstellung der Sohle 1 in einem additiven Herstellungsprozess handelt es hierbei typischerweise um einen in einem additiven Herstellungsprozess verarbeitbaren Kunststoff bzw. um ein in einem additiven Herstellungsprozess verarbeitbares Metall.

Weiterhin gilt für alle Ausführungsbeispiele, dass sich die Strukturelementanordnung 3 bzw. die Sohle 1 vermittels eines Verfahrens zur Herstellung einer Strukturelementanordnung 3 bzw. einer Sohle 1 herstellen lässt, welches sich durch die folgenden Schritte auszeichnet:
- Erzeugen und/oder Bereitstellen von die Strukturelementanordnung 3 der herzustellenden Sohle 1 bzw. von die Sohle 1 abbildenden Daten, insbesondere die Strukturelementanordnung der Sohle 1 bzw. die 1 Sohle schichtweise abbildenden Slice-Daten,
- additives Herstellen der Strukturelementanordnung 3 der herzustellenden Sohle 1 bzw. der Sohle 1, insbesondere durch sukzessives schichtweises selektives Verfestigen von Schichten aus einem selektiv verfestigbaren Baumaterial.

Das Verfahren kann mit einer Vorrichtung zur Durchführung additiver Herstellungsprozesse durch sukzessives schichtweises selektives Verfestigen von Schichten aus einem selektiv verfestigbaren Baumaterial durchgeführt werden.

## Patentansprüche

1. Sohle (1) für einen Schuh, **gekennzeichnet durch** eine Strukturelementanordnung (3), welche zumindest abschnittsweise, insbesondere vollständig, durch mehrere miteinander verbundene strebenartige Strukturelemente (4, 5) gebildet ist oder zumindest abschnittsweise, insbesondere vollständig, mehrere miteinander verbundene strebenartige Strukturelemente (4, 5) umfasst, wobei die Strukturelementanordnung (3) erste Strukturelemente (4), welche in einer ersten Raumrichtung angeordnet oder ausgebildet sind, sowie zweite Strukturelemente (5), welche in einer vor der ersten Raumrichtung verschiedenen zweiten Raumrichtung angeordnet oder ausgebildet sind, umfasst.

2. Sohle nach Anspruch 1, **dadurch gekennzeichnet, dass** die ersten Strukturelemente (4) und/oder die zweiten Strukturelemente (5) durch wenigstens zwei, insbesondere zumindest abschnittsweise parallel verlaufend angeordnete, Strukturelementsegmente (5a - 5d) gebildet sind oder wenigstens zwei, insbesondere zumindest abschnittsweise parallel verlaufend angeordnete, Strukturelementsegmente (5a - 5d) umfassen.

3. Sohle nach Anspruch 1 oder 2, **dadurch gekennzeichnet, dass** die ersten Strukturelemente (4) und/oder die zweiten Strukturelemente (5) schräg bezüglich einer horizontalen oder vertikalen Referenzachse oder - ebene verlaufend angeordnet sind.

4. Sohle nach Anspruch 2 und 3, **dadurch gekennzeichnet, dass** die ersten Strukturelemente (4) und/oder die zweiten Strukturelemente (5) durch wenigstens zwei, insbesondere zumindest abschnittsweise parallel verlaufend angeordnete, Strukturelementsegmente (5a - 5d) gebildet sind oder wenigstens zwei, insbesondere zumindest abschnittsweise parallel verlaufend angeordnete, Strukturelementsegmente (5a - 5d) umfassen, und
die Strukturelementsegmente des ersten Strukturelements (4) und/oder die Strukturelementsegmente (5a - 5d) des zweiten Strukturelements (5) schräg bezüglich einer horizontalen oder vertikalen Referenzachse oder - ebene verlaufend angeordnet sind.

5. Sohle nach Anspruch einem der vorangehenden Ansprüche, **dadurch gekennzeichnet, dass** die ersten Strukturelemente (4) als zur Übertragung von auf die Sohle (1) wirkendenden Kräften ausgebildete Kraftübertragungselemente angeordnet oder ausgebildet sind und die zweiten Strukturelemente (5) als zur Dämpfung von auf die Sohle (1) wirkenden Kräften ausgebildete Dämpfungselemente angeordnet oder ausgebildet sind.

6. Sohle nach Anspruch 5, **gekennzeichnet durch** eine eine kombinierte Kraftübertragungs-Dämpfungsstruktur bildende Substruktur (6), welche durch zwei Kraftübertragungselemente und zwei Dämpfungselemente gebildet ist, wobei
die zwei Kraftübertragungselemente in einer Ausrichtung parallel zu der Richtung einer, insbesondere bei bestimmungsgemäßer Verwendung der Sohle (1), auf die Sohle (1) wirkenden Kraft angeordnet sind, und
die zwei Dämpfungselemente in einer Ausrichtung quer zu der Richtung einer, insbesondere bei bestimmungsgemäßer Verwendung der Sohle (1), auf die Sohle (1) wirkenden Kraft angeordnet sind.

7. Sohle nach Anspruch 6, **dadurch gekennzeichnet, dass** die beiden Dämpfungselemente unter Ausbildung einer Dämpfungselementanordnung (7) parallel zueinander angeordnet oder ausgebildet sind, wobei
ein erstes Kraftübertragungselement (8) insbesondere derart relativ zu einem diesen benachbarten ersten Dämpfungselement angeordnet ist, dass über dieses Kräfte in die Dämpfungselementanordnung (7) übertragbar sind, und
ein zweites Kraftübertragungselement (8), derart relativ zu einem diesen benachbarten zweiten Dämpfungselement angeordnet ist, dass über dieses Kräfte aus der Dämpfungselementanordnung (7) auf dieses übertragbar sind.

8. Sohle nach einem der vorhergehenden Ansprüche, **dadurch gekennzeichnet, dass** die Strukturelementanordnung (3) dritte Strukturelemente (13), umfasst, welche als zur Übertragung von auf die Sohle (1), insbesondere in Längsrichtung der Sohle (1) wirkenden, Zugkräften ausgebildete Zugkraftübertragungselemente und/oder als zur Übertragung von innerhalb der Sohle (1) entstehenden, insbesondere in Längsrichtung der Sohle (1) wirkenden, Zugkräften ausgebildete Zugkraftübertragungselemente angeordnet oder ausgebildet sind, wobei die dritten Strukturelemente (13) insbesondere zwischen zwei, insbesondere parallel angeordneten oder ausgebildeten, zweiten Strukturelementen (5) angeordnet oder ausgebildet sind.

9. Sohle nach einem der vorhergehenden Ansprüche, **gekennzeichnet durch** ein auf einer Oberseite der Strukturelementanordnung (3) angeordnetes oder ausgebildetes flächiges, insbesondere viereckiges, Krafteinleitungselement (8) zum Einleiten einer auf die Sohle (1) wirkenden Kraft in die Strukturelementanordnung und/oder ein auf einer Unterseite der Strukturelementanordnung angeordnetes oder ausgebildetes flächiges, insbesondere viereckiges, Krafteinleitungselement (8) zum Ausleiten einer auf die Sohle (1) wirkenden Kraft aus der Strukturelementanordnung.

10. Sohle nach einem der Ansprüche 6 bis 9, **gekennzeichnet durch** mehrere eine kombinierte Kraftübertragungs-Dämpfungsstruktur bildende Substrukturen (6), wobei die Substrukturen (6) in einer Ebene um bestimmten Winkel, insbesondere um einen Winkel von 90°, relativ zueinander versetzt angeordnet und ausgerichtet sind.

11. Sohle nach einem der Ansprüche 9 und 10, **dadurch gekennzeichnet, dass** die Substrukturen (6) und die flächigen Krafteinleitungselemente (8) eine Einheitszelle (9) bilden, wobei die Sohle (1) mehrere entsprechende Einheitszellen (9) umfasst, wobei insbesondere unmittelbar benachbart angeordnete Einheitszellen (9) über wenigstens einen Verbindungsbereich (12), insbesondere im Bereich jeweiliger jeweiligen Einheitszellen (9) zugehörigen zweiten Strukturelementen (5), miteinander verbunden sind.

12. Sohle nach Anspruch 11, **dadurch gekennzeichnet, dass** sich wenigstens zwei Einheitszellen (9) in den geometrisch-konstruktiven Eigenschaften und/oder den strukturellen Eigenschaften, d. h. insbesondere den mechanischen Eigenschaften, bevorzugt den Dämpfungseigenschaften der diesen jeweils zugehörigen Dämpfungselementanordnungen, unterscheiden.

13. Sohle nach einem der vorhergehenden Ansprüche, **dadurch gekennzeichnet, dass** die Sohle (1) in mehrere unterschiedliche geometrisch-konstruktive Eigenschaften und/oder den strukturelle Eigenschaften aufweisende Zonen (Z1 - Z7) aufgeteilt ist.

14. Schuh (2), umfassend wenigstens eine Sohle (1) nach einem der vorhergehenden Ansprüche.

15. Verfahren zur Herstellung einer Sohle (1) für einen Schuh (2) gemäß einem der Ansprüche 1 bis 13, **gekennzeichnet durch** die Schritte:
- Erzeugen und/oder Bereitstellen von die Sohle (1) abbildenden Daten, insbesondere die Sohle (1) schichtweise abbildenden Slice-Daten,
- additives Herstellen der Sohle (1), insbesondere durch sukzessives schichtweises selektives Verfestigen von Schichten aus einem selektiv verfestigbaren Baumaterial.
